Europäisches Patentamt

(19) European Patent Office

Office européen des brevets

(11) Publication number: **0 022 089**

A2

(12) **EUROPEAN PATENT APPLICATION**

(21) Application number: 80830010.7

(51) Int. Cl.³: **F 24 J 3/04**

(22) Date of filing: 21.02.80

(30) Priority: 15.06.79 IT 8340679

(43) Date of publication of application:
07.01.81 Bulletin 81/1

(84) Designated Contracting States:
AT BE CH DE FR GB LU NL SE

(71) Applicant: Tomadini, Gino
N. 4 Viale Martelli
I-33170 Pordenone(IT)

(72) Inventor: Tomadini, Gino
N. 4 Viale Martelli
I-33170 Pordenone(IT)

(74) Representative: D'Agostini, Giovanni, Dr.
n. 17 via G.Giusti
I-33100 Udine(IT)

(54) A heat recovery system from fluid in circuits at low temperature to circuits at high temperature.

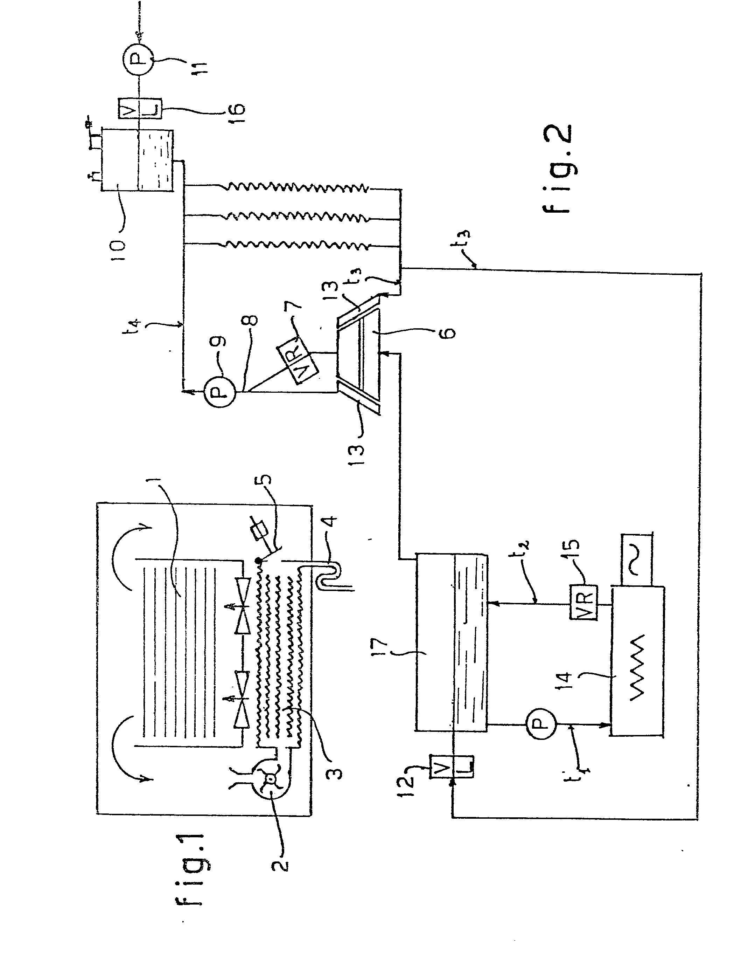

(57) A heat recovery system from a fluid at low temperature in the primary circuit towards a higher temperature ($t_4$) in the secondary circuit, above the point of evaporation, at atmospheric pressure, with a fluid compression means (6), and with an apparatus that can assorb heat through the evaporated fluid in the said primary circuit at low temperature and pressure, to compress the fluid into the said secondary circuit, and possibility to repeat the cycle comprising a shunt for the said primary circuit downstream of the utilisation of the said secondary circuit at a temperature ($t_3$) generally lower than boiling point of the fluid, wherein the said shunt brings into an evaporation chamber (17) and the vapours are sucked through a compression means (6) that forwards the vapours to condense themselves again in the said secondary circuit (figure 2).

./...

fig.2

- 1 -

<u>A heat recovery system from fluid in circuits at low temp-
erature to circuits at high temperature.</u>

The invention relates to a heat recovery system from fluid
in circuits at low temperature to circuits at a higher temperature.

The tendency of heat loss is noted when the heat is at an
equal or lower temperature of the used circuit as happens
for instance in driers with discharges of hot, humid air, or
in ovens and other such likes with vapour loss, or even in
water cooling systems in motors as in the case of generators,
etc. for which the result is given that being able to recuperate the heat of these discharges, the production of these
installations can be increased.

The first scope of this invention is the achievment of a new
heat recovery system or apparatus for the recuperation of
heat from water or vapour from low temperature circuits to
high temperature circuits as explained before.

Another scope of the invention is to achieve a system or
apparatus in which, with simple means and special devices, recovery of the heat dispersed in the discharges is possible recycling at a higher temperature and this allows its re-use without complicated heat pumps and without use of intermediate fluids.

The invention claimed consists in a heat recovery system or apparatus for the recovery of heat from a fluid as for example water or vapour from a low temperature primary circuit towards a higher temperature secondary circuit with fluid compression means depending on the temperature difference between said circuits equipped or not with a heat exchanger means, and with an apparatus that can assorb heat through the evaporated fluid in the said primary circuit at low temperature and pressure, to compress the fluid into the said secondary circuit obtaining the increase in temperature, condensation, and possibility to repeat the cycle, being the said higher temperature in the secondary circuit $(t_4)$ above the point of evaporation of its liquid, at atmospheric pressure, or anyway above the temperature of the said primary circuit, wherein is provided a shunt for the said primary circuit, downstream of utilisation in the said secondary circuit, at a temperature $(t_3)$ generally lower than boiling point of the said liquid, in relation to the existing pressure in that point of the circuit, and wherein the said shunt brings into an evaporation primary circuit chamber (17) of the said liquid being the evaporation favoured by the depression in the said evaporation chamber, achieved by sucking the evaporated vapours through a pump means (6) that forwards the vapours to condense themselves again in the said secondary circuit of utilisation increasing the temperature $(t_4)$.

One way of carrying out the invention is described in detail below with reference to drawings which illustrate two specific embodiments in which:-

Figure 1 is a schematic representation of a drying unit or oven for example in cooking pasta.

Figure 2 is a preferably more detailed embodiment in a schematic view of the invention concerning the primary and secondary circuits.

Figure 1 shows the sucking up of the humidified air vapours of the humidity of the product 1, and said humidified air and vapours are sent by the pump blower 2, under pressure to condensate its humidity in the exchanger 3, and the condensation of water is discharged externally by a shunt pipe 4, while the pressure reducer exhaust valve 5, allows the air to become again non-humid in the cycle keeping however in 3 the necessary pressure to obtain the heat exchange allowing it to become reassorbed by the primary circuit going back into 1 favouring the evaporation of more water allowing the repetition of the cycle.

Figure 2 shows a container (17) holding water kept at a constant level by a level valve (12) and where a reduced pressure is maintained to boil the water at a certain temperature and in this container a generator (14) intakes the water through a pump for its own cooling system sending through a pressure reducing valve (15), the water thus heated, to evaporate, therefore cooling itself ready to repeat the cooling cycle of the generator (14).

In this second case, the vapour which forms becomes sucked by the pump (6) with a cooling water system (13) and is forwarded, through a non-return valve (7), to condensate directly for use or, if a heat exchanger is not used, directly into the water of the secondary circuit (8) heating it. The pump (6) can be cooled by an exchanger (13) using the same water of the secondary circuit (8) by starting to transmit to it part of the compressed heat of the pump (6).

Naturally the secondary circuit will be equipped with everything necessary like a circulation pump (9), an expansion vessel (10), a charge pump (11), a valve or a remote control switch of level (16) and so on as a pressure valve, safety valve, air vent, etc.

This same system can be used if, from a heating circuit at low temperature there is the necessity to obtain some heat for use at a more high temperature.

A further characteristic consists in the fact that the temperatures relieved in the various parts of the installation in figure 2 are: $t_1 = 78°C$; $t_2 = 85°C$; $t_3 = 100°C$; $t_4 = 133°C$.

Udine, 12th February 1980

APPLICANT

· Tomadini Gino

by

D'Agostini Dr.Giovanni

REPRESENTETIVE

Claims:

1. Heat recovery system or apparatus for the recovery of heat from a fluid as for example water or vapour from a low temperature primary circuit towards a higher temperature secondary circuit with fluid compression means depending on the temperature difference between said circuits equipped or not with a heat exchanger means, and with an apparatus that can assorb heat through the evaporated fluid in the said primary circuit at low temperature and pressure, to compress the fluid into the said secondary circuit obtaining the increase in temperature, condensation, and the possibility to repeat the cycle, being the said higher temperature in the secondary circuit $(t_4)$ above the point of evaporation of its liquid, at atmospheric pressure, or anyway above the temperature of the said primary circuit, wherein is provided a shunt for the said primary circuit, downstream of utilisation in the said secondary circuit, at a temperature $(t_3)$ generally lower than boiling point of the said liquid, in relation to the existing pressure in that point of the circuit, and wherein the said shunt brings into an evaporation primary circuit chamber (17) of the said liquid being the evaporation favoured by the depression in the said evaporation chamber, achieved by sucking the evaporated vapours through a pump means (6) that forwards the vapours to condensate themselves again in the said secondary circuit of utilisation increasing the temperature $(t_4)$.

2. A heat recovery system or apparatus as claimed in claim 1 in which the evaporation primary circuit chamber (17) is fed with water kept at a constant level by a level valve (12) and where a reduced pressure is maintained to boil the water at a determined temperature, with the characteristic that a pump (P) sucks the water of the said chamber (17) to cool a generator (14) for its own cooling system, and sends, through a pressure reducing valve (15) the water already heated by the said generator (14) to evaporate into the chamber (17) cooling itself to repeat the cooling cycle of the generator, and in which the vapour that forms into the said chamber (17) is sucked by means of a pump (6) and forwarded, preferably through a non-return valve (7) to condensate directly in a utilisation system on maintaining separate the said primary circuit from the said secondary circuit utilising heat exchangers, or directly into the water of the secondary circuit (8), heating it.

3. Heat recovery system or apparatus as claimed in claim 2 wherein the pump means (6) is cooled by an exchanger (13) using the same water of the secondary circuit (8) that transmits to it by means of compression some of the heat.

4. Heat recovery system or apparatus as claimed in claim 3, in which the water sucked from the evaporation chamber (17) is at a temperature $(t_1)$ below $100^\circ$ C and the water that returns to the same chamber (17) after passing through the generator (14) has a temperature $(t_2)$ below $100^\circ$ C but greater than the first temperature $(t_1)$.

5. Heat recovery system or apparatus as claimed in preceding claims 5 and 6, in which the water in the secondary utilisation circuit (8) is at the temperature $(t_4)$ above $100^\circ$ C and wherein the temperature $(t_3)$ downstream of the said secondary utilisation circuit (8) is inferior of the boiling point in relation to the existing pressure in that point $(t_3)$ for the shunt concerning the said primary circuit.

6. Heat recovery system or apparatus as claimed in preceding claims wherein the said primary and secondary circuits are introduced into a drying process unit or oven as used in drying or cooking pasta respectively and in a way that the product contained in the unit or cell (1) evaporates and the humidified air and vapours are sucked by means of a pump blower (2) that send the said sucked air and vapours under pressure to condense in an exchanger (3) wherein is provided a shunt discharge pipe (4) to the exterior of the condensed water and,being provided downstream of the exchanger (3), a pressure reducer exhaust valve (5) allowing the air to become non-humid again in the cycle keeping however in (3) the necessary pressure to obtain the exchange of heat in a way that this same heat reassorbed by the primary circuit, returns to cell (1) favouring the evaporation of more water and allowing the cycle to repeat itself again.

Udine, 13th February 1980

APPLICANT

Tomadini Gino

by

D'Agostini Dr.Giovanni

REPRESENTETIVE

fig.1

fig.2

0022089